# EUROPÄISCHE PATENTSCHRIFT

(11) **EP 3 153 754 B1**
(45) Veröffentlichungstag und Bekanntmachung des Hinweises auf die Patenterteilung: **24.01.2018**
(21) Anmeldenummer: 16193049.0
(22) Anmeldetag: 10.10.2016
(51) Int. Cl.: F16L 5/08, H02G 3/22, H02G 15/013

(54) **QUETSCHFLANSCH MIT MONTAGEKONTROLLE**
COMPRESSIBLE FLANGE WITH MOUNTING CONTROL
BRIDE COMPRESSIBLE À ASSEMBLAGE CONTRÔLÉ

(30) Priorität: 09.10.2015 DE 102015219599
(43) Veröffentlichungstag der Anmeldung: 12.04.2017
(73) Patentinhaber: Poloplast GmbH & Co. KG, 4060 Leonding (AT)
(72) Erfinder: BRANDSTÄTTER-FELBER, Simone, 4851 Gampern (AT); MAYRBÄURL, Erwin, 4481 Asten (AT); SCHUSTER, Dieter, 4063 Hörsching (AT)
(74) Vertreter: Hoefer & Partner Patentanwälte mbB

(56) Entgegenhaltungen:
- EP-A1- 1 211 450
- EP-A1- 2 829 781
- DE-A1- 19 601 288

## Beschreibung

Die Erfindung bezieht sich auf einen Quetschflansch gemäß den Merkmalen des Oberbegriffs des Hauptanspruchs.

Aus dem Stand der Technik sind Quetschflansche in unterschiedlichen Ausgestaltungen vorbekannt. Sie dienen zum Abdichten zumindest eines Rohres, eines Kabels oder eines ähnlichen Bauteils innerhalb einer zylindrischen Ausnehmung, beispielsweise einer Mauerdurchführung, durch welche das Rohr, Kabel oder ähnliches, durchgeführt wird. Dabei wird das elastische Dichtelement, welches üblicherweise aus einem Gummi-Material oder einem ähnlichen elastischen Material besteht, zwischen zwei Spannelementen oder ringförmigen Flanschen zusammengequetscht. Diese axiale Quetschung führt zu einer radialen Verformung des Dichtelements. Die Begriffe "axial" und "radial" beziehen sich auf eine Mittelachse des Quetschflansches bzw. des Rohres, Kabels und/oder der zylindrischen Ausnehmung. Das Material des Dichtelements weicht somit radial nach außen aus und drückt gegen die Wandung des Rohres oder der Mauerdurchführung. Weiterhin weicht das Material des Dichtelements auch radial nach innen aus und quetscht somit ein durchgeführtes, abzudichtendes Rohr, Kabel oder ähnliches. Durch die Verpressung des Dichtelementes entsteht eine entsprechende Dichtwirkung, die beispielsweise ausreichend ist, um von außen gegen anstehendes Wasser abzudichten. Unterschiedlich große Ringspalte erfordern eine unterschiedliche axiale Quetschung, um den gleichen Grad an Dichtheit zu gewährleisten. Zu große Anpressdrücke des Dichtelementes an dünnwandige Rohre können zu bleibenden Verformungen an diesen und in weiterer Folge zu Undichtheiten führen.

Trotz guter Auslegung derartiger Dichtelemente ist es für den Verarbeiter schwierig zu erkennen, ob eine nötige axiale Quetschung hergestellt wurde, um eine dauerhafte Dichtheit zu gewährleisten. In der Praxis ist es üblich, Anziehdrehmomente zu definieren, welche eine ausreichende Dichtheit gewährleisten sollen. Ein Drehmomentschlüssel ist aber normalerweise nicht Teil der Baustellenausrüstung eines Installateurs.

Aus der DE 20 2011 104 521 U1 ist ein Quetschflansch bekannt, welcher im Wesentlichen mit einem ringförmigen elastischen Dichtelement sowie mit einem ersten und einem zweiten Spannelement, mittels derer das Dichtelement quetschbar ist, ausgeführt ist. Der maximale Grad der Quetschung wird durch einen mechanischen Begrenzer definiert. Da sich das Dichtelement hierdurch nur bis zu einem gewissen Maße in radialer Richtung deformieren lässt, ist die gewünschte Dichtwirkung begrenzt. Dies wiederum führt dazu, dass das Dichtelement möglichst passgenau zum Durchmesser des Außenrohres bzw. der Mauerdurchführung sowie zum Durchmesser des abzudichtenden Rohres hergestellt werden muss.

In der WO 96/35904 A1 wird eine aus mehrschichtigen Ringelementen bestehende Vorrichtung zum Abdichten eines Ringraumes vorgeschlagen, welche die axiale Quetschung des Dichtelements über einen an einem der Druckelemente befestigten Zapfen anzeigt, welcher durch das Dichtelement und das andere Druckelement ragt und dessen freies Ende somit beim Quetschen des Dichtelements durch das Druckelement hervorsteht oder sichtbar ist. Die axiale Quetschung ist somit ablesbar, es fehlt aber bei dieser Lösung eine Vorgabe der erforderlichen axialen Quetschung für den jeweiligen Einbaufall.

Die EP 2 829 781 A1 zeigt einen Presskörper für aus Ringelementen aufgebaute Quetschflansche, welcher die aufgebrachte Quetschkraft anzeigt, jedoch aus vielen Einzelteilen zusammengesetzt ist und das Dichtelement über mehrere komplexe Presskörper verformt. Dabei ist an einem Presskörper ein in axialer Richtung verschiebbarer Anzeigestift gelagert, welcher durch die Verquetschung und Verformung des Dichtelements in axialer Richtung verschoben wird. Der Presskörper weist an seiner Außenseite einen die Ausnehmung, in welcher der Anzeigestift verschiebbar ist, verschließenden Öffnungsanzeiger auf, welcher wie ein Verschlussdeckel wirkt und eine Sollbruchstelle hat. Wenn der Anzeigestift in axialer Richtung über ein bestimmtes Maß verschoben wird, bricht die Sollbruchstelle, woraufhin der deckelartige Öffnungsanzeiger von dem Quetschflansch abfällt. Durch die Position des Anzeigestiftes und durch das Fehlen des Öffnungsanzeigers können Rückschlüsse auf die Quetschung des Dichtelements gezogen werden.

Die EP 1 211 450 A1 zeigt einen Quetschflansch, welcher Durchgangslöcher im Spannelement aufweist, durch welche das Material des Dichtelementes durchgequetscht werden kann und bei Erreichen der Spannelementoberfläche eine axiale Quetschung anzeigt. Diese Lösung funktioniert jedoch nur bei metallenen Spannelementen mit relativ geringer Wanddicke, nicht jedoch bei Spannelementen aus Kunststoff, welche, um die erforderliche Steifigkeit zu erreichen, mit einer wesentlich größeren Bauhöhe ausgeführt werden.

Der Erfindung liegt die Aufgabe zugrunde, einen Quetschflansch der eingangs genannten Art zu schaffen, welcher bei einfachem Aufbau und einfacher, kostengünstiger Herstellbarkeit ein hohes Maß an Dichtwirkung durch den Einsatz einer einfachen, mehrfach einsetzbaren Montagekontrolle sicherstellt. Erfindungsgemäß wird die Aufgabe durch die Merkmalskombination des Hauptanspruchs gelöst, die Unteransprüche zeigen weitere vorteilhafte Ausgestaltungen der Erfindung.

Der erfindungsgemäße Quetschflansch weist zunächst ein im Wesentlichen ringförmiges elastisches Dichtelement auf. Dieses kann beispielsweise mit einem Längsschlitz versehen sein, um es über ein bereits in einer Mauerdurchführung montiertes Rohr zu legen. Weiterhin umfasst der erfindungsgemäße Quetschflansch ein erstes und ein zweites Spannelement. Die Spannelemente liegen in Axialrichtung, bezogen auf eine Mittelachse des Dichtelements, an beiden Seiten des Dichtelements an und sind mittels Spannschrauben gegeneinander verspannbar, um das Dichtelement zu verquetschen. Bei einer Verquetschung des Dichtelements in axialer Richtung verformt sich dieses auch in radialer Richtung. Die radiale, nach außen gerichtete Verformung dichtet zu der Mauerdurchführung ab, während die radiale, nach innen gerichtete Verformung das zumindest eine Rohr oder ähnliches abdichtet.

Es versteht sich, dass die Erfindung nicht auf die Verwendung bei Mauerdurchführungen beschränkt ist, vielmehr kann der erfindungsgemäße Quetschflansch auch zur Abdichtung an anderen Bauteilen eingesetzt werden. Die Erfindung ist auch nicht auf die Abdichtung nur eines, zentrisch in dem Quetschflansch angeordneten Rohres, Kabels oder ähnlichem, beschränkt. Vielmehr ist es auch möglich, das Dichtelement so zu modifizieren, dass mehrere zueinander parallel verlaufende Rohre, Kabel oder ähnliches, abgedichtet werden können.

Erfindungsgemäß versteht es sich weiterhin, dass das erste und das zweite Spannelement jeweils ringförmig ausgebildet sind, um eine axiale Presskraft auf das Dichtelement aufbringen zu können, während der zentrische Bereich der Spannelemente die ungehinderte Durchführung des Rohres, Kabels oder ähnlichem, ermöglicht.

Erfindungsgemäß weist zumindest eines der Spannelemente zumindest eine axiale Durchgangsausnehmung auf. Durch eine axiale Verquetschung des Dichtelements durch Verspannung der beiden Spannelemente können Bereiche des elastischen Dichtelements in die Durchgangsausnehmung eingedrückt werden.

Weiterhin ist erfindungsgemäß vorgesehen, dass in der zumindest einen Durchgangsausnehmung ein in Längsrichtung der Durchgangsausnehmung verschiebbares Anzeigeelement angeordnet ist. Dieses ist bevorzugterweise stiftförmig ausgebildet und so dimensioniert, dass bei einer axialen Verquetschung des Dichtelements Materialbereiche des Dichtelements, welche in die Durchgangsausnehmung eingepresst werden, zu einer axialen Verschiebung des Anzeigeelements führen.

Das Anzeigeelement ist in der Ausgangsposition in der Durchgangsausnehmung aufgenommen. Es kann vollständig oder teilweise in der Durchgangsausnehmung angeordnet sein und beispielsweise mit der Oberfläche des Spannelements bündig sein. Es kann in der Ausgangsposition soweit nicht-sichtbar sein, während es in der ausgestoßenen Position deutlich sichtbar ist.

Erfindungsgemäß ist vorgesehen, dass das Anzeigeelement in dieser Ausgangsposition mittels einer Verrastungseinrichtung in der Durchgangsausnehmung gehalten und verrastet ist. Durch das Einpressen von Material des Dichtelements in die Durchgangsausnehmung wird ein Druck auf das Anzeigeelement ausgeübt, so dass dieses in der Durchgangsausnehmung nach Überwindung der Verrastungseinrichtung verschiebbar ist.

Durch die Verrastungseinrichtung ist erfindungsgemäß sichergestellt, dass zunächst ein geeigneter Druck durch das in die Durchgangsausnehmung eingepresste Material des Dichtelements aufgebracht wird. Dieser Druck führt zu einem plötzlichen Lösen der Verrastungseinrichtung und zu einem plötzlichen Ausstoßen des Anzeigeelements aus der Durchgangsausnehmung. Erfindungsgemäß wird das Anzeigeelement somit nicht kontinuierlich in der Durchgangsausnehmung verschoben. Vielmehr erfolgt nach dem Lösen der Verrastungseinrichtung bzw. dem Überwinden der Verrastungskräfte eine plötzliche Freigabe des Anzeigeelements, so dass dieses aus der Durchgangsausnehmung herausgeschleudert wird und eine wesentliche Positionsänderung erfährt. Dieser Vorgang kann zusätzlich auch mit einem akustischen Geräusch verbunden sein. Der Installateur des erfindungsgemäßen Quetschflansches bekommt somit bei Erreichen einer ausreichenden Verspannung der beiden Spannelemente gegeneinander und bei einer daraus resultierenden Verquetschung des Dichtelements eine eindeutige Information, dass der Quetschflansch korrekt montiert ist und eine ausreichende Dichtwirkung aufbringt.

Das Anzeigeelement ist auch nach einer Demontage des Quetschflansches wieder in diesem einsetzbar, so dass die ausreichende Quetschung auch bei einer weiteren Verwendung des Quetschflansches kontrollierbar ist.

Erfindungsgemäß ist somit ein Quetschflansch vorgesehen, welcher im Wesentlichen aus einem elastischen Dichtelement, welches üblicherweise aus einem Gummi-Material besteht, zwei Spannelementen oder ringförmigen Flanschen, Spannschrauben und einer zusätzlichen Montagekontrolle in Form des stiftartigen Anzeigeelements besteht, welche das Erreichen der erforderlichen axialen Quetschung anzeigt, indem sie sich über eine aufgebrachte Kraft schlagartig löst und durch eine wesentliche Positionsveränderung das Erreichen der erforderlichen Quetschung anzeigt. Die Kraft wird durch das Aufwölben der gequetschten Dichtelementfläche in eine Ausnehmung des ringförmigen Spannelementes erzeugt.

Diese Auswölbung der Dichtelementfläche weist eine Federkennlinie auf, welche nach Kontakt mit der Montagekontrolle eine steigende Kraft auf die Montagekontrolle (Anzeigeelement) ausübt. Die Montagekontrolle löst sich nach Erreichen der Haltekraft und wird durch die wie eine vorgespannte Feder wirkende Auswölbung des Materials des in axialer Richtung verquetschten Dichtelements aus der Halteposition geschleudert.

Die Federkennlinie ist abhängig von der gesamten Verpressung des Dichtelementes. Ist der zu dichtende Ringraum größer, so wird die erforderliche Kraft zum Auslösen des Indikators erst bei einer höheren axialen Quetschung erreicht, bei kleinerem Ringraum wird die erforderliche Kraft bereits bei einer geringeren axialen Quetschung erreicht.

Um eine einfache Anpassung an unterschiedliche Außendurchmesser von abzudichtenden Leitungen vornehmen zu können, kann es günstig sein, wenn das Dichtelement mit einer oder mehreren Ausnehmung versehen ist und/oder, um die Ausnehmungen mehrere entnehmbare oder lösbare Ringelemente, ähnlich einem Zwiebelring, angeordnet sind.

Wird die Länge des Gewindes der Spannschrauben richtig gewählt, so ist es möglich, dass bei falscher Wahl des freien Ringraumes durch den Verarbeiter, wenn zum Beispiel ein Ringelement des Dichtelements zu viel aus dem Dichtelement entfernt wird, ein Auslösen der Montagekontrolle verhindert wird. Der Verarbeiter kann also erkennen, dass das Dichtelement nicht funktionsfähig ist und kann es ersetzen, bevor es zu Undichtheiten kommt.

Erfindungsgemäß ist es besonders günstig, wenn der Endbereich des Anzeigeelements radial, bezogen auf eine Längsachse des Anzeigeelements, verformbar ist. Diese Verformung wird bei einem axialen Druck des Dichtelements dann erfolgen, wenn dieser Druck ausreichend ist. Hierdurch werden ein plötzliches Lösen des Anzeigeelements und ein Herausschleudern des Anzeigeelements sichergestellt. Dabei ist es besonders günstig, wenn der Endbereich des Anzeigeelements mit zumindest einem Längsschlitz versehen ist. Dieser Längsschlitz gewährleistet die radiale Verformbarkeit des Endbereichs im Bereich der Verrastungseinrichtung.

Weiterhin ist es günstig, wenn der Endbereich des Anzeigeelements mit radialen, bezogen auf eine Längsachse des Anzeigeelements, angeordneten Rastnasen versehen ist, welche einen Teil der Verrastungseinrichtung bilden. Passend hierzu ist es in bevorzugter Weiterbildung der Erfindung auch vorteilhaft, wenn an der Innenwandung der Durchgangsausnehmung zumindest ein Rastelement ausgebildet ist, welches mit den Rastnasen des Anzeigeelements zusammenwirkt. Das Rastelement kann beispielsweise in Form eines Rastrings oder in ähnlicher Weise ausgebildet sein.

Erfindungsgemäß kann die Verrastungsvorrichtung im Bereich der Durchgangsausnehmung an der dem elastischen Element zugewandten Seite der Durchgangsausnehmung oder an der nach außen weisenden Seite der Durchgangsausnehmung angeordnet sein. Entscheidend ist, dass das Dichtelement bei seiner Verquetschung eine ausreichende Kraft auf das Anzeigeelement ausübt, welche in der Folge zu einer schlagartigen Lösung der Verrastungseinrichtung führt.

Weiterhin ist es vorteilhaft, wenn das Anzeigeelement einen vergrößerten Kopf aufweist, welcher in einer geeigneten Erweiterung der Durchgangsausnehmung an der Außenseite des Spannelements angeordnet ist. Dieser vergrößerte Kopf bildet somit für den Verarbeiter nochmals eine zusätzliche optische Anzeige, ob sich das Anzeigeelement noch in der Ausgangsposition befindet oder bereits durch die Durchgangsausnehmung herausgeschleudert wurde.

Es versteht sich, dass bei dem erfindungsgemäßen Quetschflansch am Umfang des Spannelements mehrere Anzeigeelemente angeordnet sein können.

Eines der Spannelemente weist bevorzugterweise mehrere axiale Durchgangsausnehmungen auf, durch welche Spannschrauben durchführbar sind, während das andere Spannelement mit fluchtenden Gewindeausnehmungen versehen ist.

Die Montagekontrolle kann als Stift oder Zapfen ausgeführt sein, welcher an dem der Dichtung zugewandten Ende eine form- oder kraftschlüssige Verbindung zum Spannelement aufweist. Diese Verbindung muss auf die erforderliche Quetschung des Dichtelementes abgestimmt werden und löst sich erst wenn, in Abhängigkeit des freien Ringraumes, die für die Dichtheit erforderliche axiale Quetschung des Dichtelementes erreicht wird. Als formschlüssige Verbindung kommt zum Beispiel eine Schnapp- oder Ringschnappverbindung in Frage, welche mechanisch einfach ausgelegt werden kann. Es sind aber auch andere Lösungsvarianten denkbar, welche eine definierte Haltekraft übertragen, welche nach Überwindung schlagartig auf Null absinkt.

Ein Anbringen von mehr als einer Montagekontrolle über den Umfang ist für eine gleichmäßige Dichtheit am gesamten Umfang von Vorteil.

Zum Verspannen der beiden Spannelemente gegeneinander kann es günstig sein, wenn das erste Spannelement mit axialen Gewindeausnehmungen versehen ist, in weiche Schrauben eindrehbar sind, die durch zu den Gewindeausnehmungen fluchtende Ausnehmungen des zweiten Spannelements geführt werden. Der gesamte Herstellungsaufwand des erfindungsgemäßen Quetschflansches minimiert sich hierbei beträchtlich.

Die Spannelemente und Dichtelemente können auch geteilt ausgeführt sein, um ein nachträgliches Anbringen an bereits durch das Mauerwerk durchgeführte Leitungen, zu ermöglichen.

Im Folgenden wird die Erfindung anhand eines Ausführungsbeispiels in Verbindung mit der Zeichnung beschrieben. Dabei zeigt:
- Fig. 1: eine perspektivische Darstellung eines erfindungsgemäßen Quetschflansches im nicht-montierten Zustand,
- Fig. 2: eine Draufsicht auf den Quetschflansch gemäß Fig. 1,
- Fig. 3: eine Teil-Schnittansicht längs der Linie A-A von Fig. 2, und
- Fig. 4-6: Detailansichten des Details B von Fig. 3 in unterschiedlichen Montagezuständen.

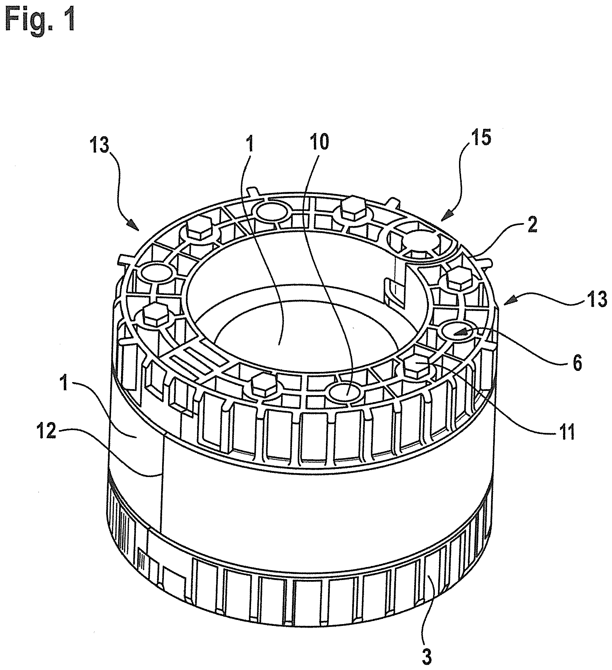

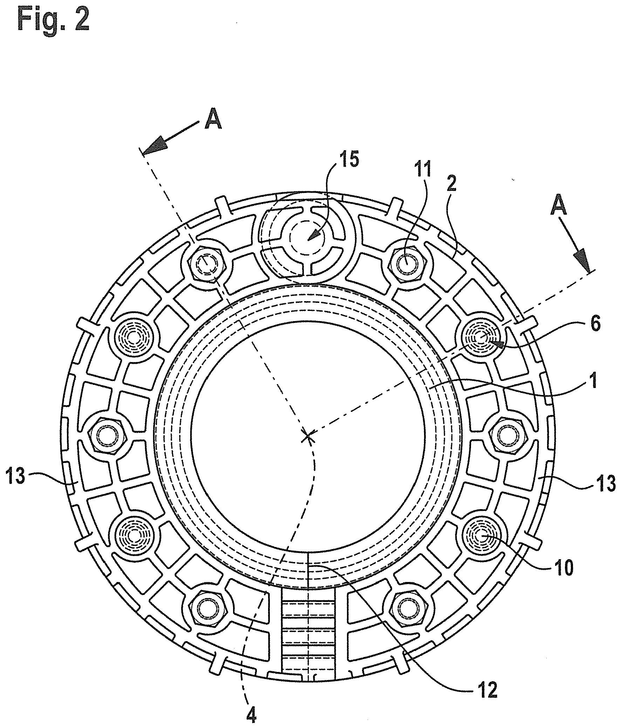

Aus den Fig. 1 und 2 ist ersichtlich, dass der erfindungsgemäße Quetschflansch ein zylindrisches, in Form eines Zylinderrings ausgebildetes Dichtelement 1 umfasst. Dieses besteht aus einem elastischen Material, beispielsweise aus Gummi. Das Dichtelement ist mit einem in axialer Richtung, bezogen auf eine Mittelachse 4, verlaufenden Montageschlitz 12 versehen, um das Dichtelement 1 auf ein bestehendes Rohr oder Kabel auflegen zu können.

Beidseitig des Dichtelements 1 sind ein erstes Spannelement 2 und ein zweites Spannelement 3 angeordnet. Diese bestehen bevorzugterweise aus einem starren Kunststoffmaterial. Die beiden Spannelemente 2, 3 werden mittels Spannschrauben 11 gegeneinander verspannt. Hierfür weist das zweite Spannelement 3 im Einzelnen nicht dargestellte Gewindeausnehmungen auf, während das Spannelement 2 mit geeigneten Durchgangsausnehmungen versehen ist.

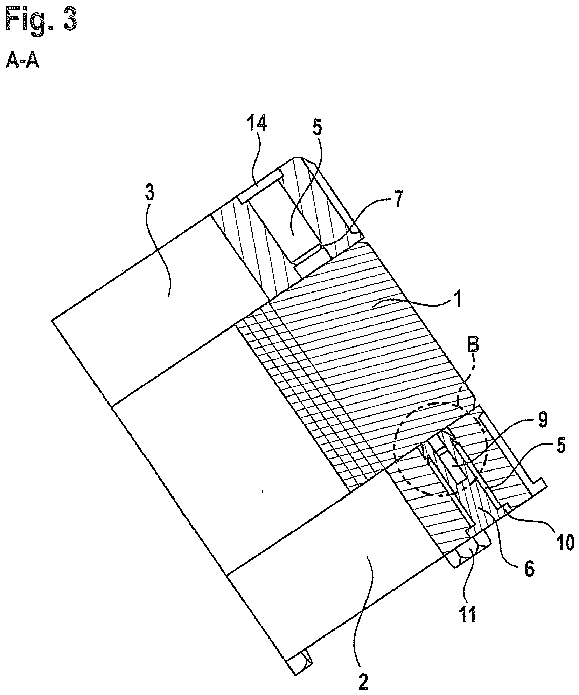

Wie insbesondere in Fig. 3 dargestellt, weist zumindest eines der Spannelemente 2, 3 eine Durchgangsausnehmung 5 auf, welche im Wesentlichen zylindrisch ausgebildet ist und an ihrer Innenwandung ein ringförmiges Rastelement 7 aufweist, welches Teil einer Verrastungseinrichtung ist. An der Außenseite des Spannelements 2, 3 ist die Durchgangsausnehmung 5 mit einer Erweiterung 14 versehen.

Wie sich aus den Fig. 1 und 2 ergibt, bestehen das erste Spannelement 2 und das zweite Spannelement 3 jeweils aus zwei Halbschalen 13, welche über einen Scharnierbereich 15 miteinander verbunden sind. Somit können die Spannelemente 2, 3 über ein bereits montiertes Rohr, Kabel oder ähnliches aufgesteckt werden, ähnlich, wie dies auch bei dem Dichtelement 1 mit dem Montageschlitz 12 vorgesehen ist.

Die Fig. 3 zeigt, dass in der Durchgangsausnehmung 5 ein stiftartiges Anzeigeelement 6 angeordnet ist, welches einen Teil einer Montagekontrolle bildet. Das stiftartige Anzeigeelement 6 weist einen Kopf 10 auf, welcher in der Erweiterung 14 der Spannelemente 2 bzw. 3 aufgenommen ist. Die Fig. 3 zeigt einen nicht-verspannten oder verquetschten Ausgangszustand, bei welchem der Kopf 10 vollständig in der Erweiterung 14 angeordnet ist und somit nicht über die Oberfläche oder Oberflächenkontur des jeweiligen Spannelements 2, 3 vorsteht. Durch Verwendung eines Anzeigeelementes mit vergrößertem Kopf kann die Sichtbarkeit verbessert werden.

Die Fig. 3 zeigt weiterhin, dass das Anzeigeelement 6 mit zumindest einem Längsschlitz 9 versehen ist. An den Endbereichen weist das Anzeigeelement 6 Rastnasen 8 auf, welche Teil der Verrastungseinrichtung sind und im Ausgangszustand (Fig. 3) gegen das ringförmige Rastelement 7 anliegen. Die Rastnasen 8 sind leicht abgeschrägt, um, wie nachfolgend beschrieben werden wird, ein ruckartiges oder plötzliches Lösen des Anzeigeelements 6 bei radialer Verformung des Endbereichs des Anzeigeelements 6 von dem ringförmigen Rastelement 7 zu ermöglichen.

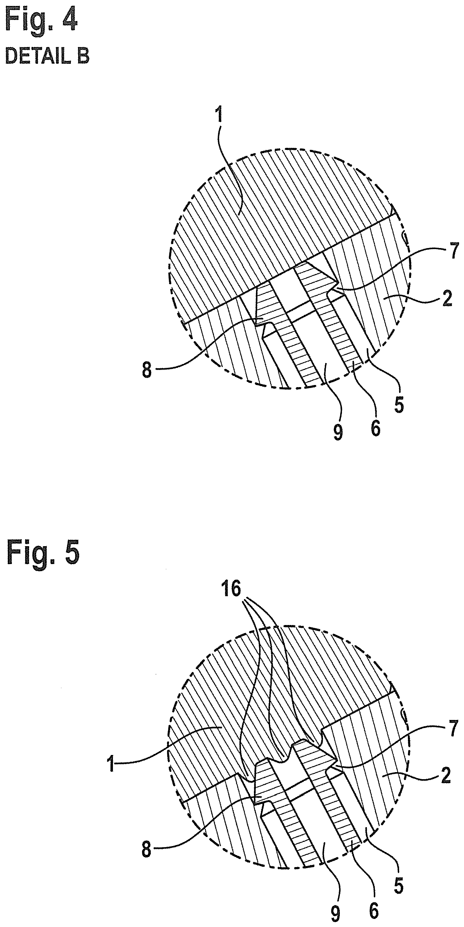

Die Fig. 4 bis 6 zeigen das Detail B gemäß Fig. 3.

Die Fig. 4 zeigt einen Ausgangszustand im nicht-montierten und nicht-verquetschten Zustand, so wie dies in Fig. 3 gezeigt ist. Dabei ist ersichtlich, dass das Anzeigeelement 6 durch seine Rastnasen 8 an dem Rastelement 7 (Rastring) gehalten ist. Der Endbereich des Anzeigeelements 6 liegt gegen das Dichtelement 1 an.

Bei einer in Fig. 5 dargestellten beginnenden axialen Verquetschung des Dichtelements 1 tritt Material des Dichtelements 1 in die Durchgangsausnehmung 5 ein und übt einen Druck gegen den Endbereich des Anzeigeelements 6 aus. Bei der in Fig. 5 dargestellten Position ist dieser Druck noch nicht ausreichend, um die Verrastungsrichtung 7, 8 freizugeben. Steigt bei einer weiteren axialen Verquetschung des Dichtelements 1 der Druck durch den eingequetschten Materialbereich 16 des Dichtelements 1 weiter an, so führt dies zu einer radialen Verformung der Endbereiche des Anzeigeelements 6 im Bereich des Längsschlitzes 9. Der Begriff "axial" ist in diesem Zusammenhang auf die Längsachse der Durchgangsausnehmung 5 bzw. des Anzeigeelements 6 bezogen. Bei einem ausreichenden Anstieg des Drucks und einer entsprechenden Verformung des Endbereichs des Anzeigeelements 6 löst sich schlagartig die Verrastungseinrichtung 7, 8, so dass das Anzeigeelement 6 aus seiner Ausgangslage der Durchgangsausnehmung 5 herauskatapultiert wird.

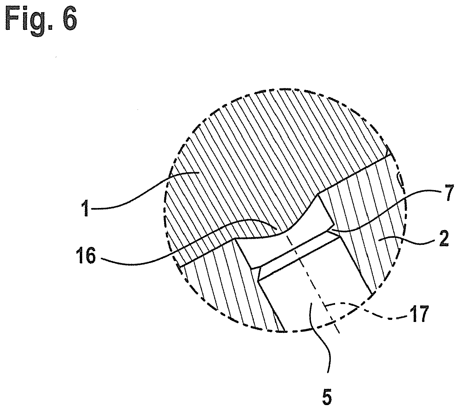

Wie sich insbesondere aus der Fig. 6 ergibt, ist die Anlagefläche des Rastelements 7 im Wesentlichen in einer Radialebene, bezogen auf die Mittelachse 17 der Durchgangsausnehmung 5 angeordnet. Die Fig. 5 zeigt, dass die Flanke der Rastnase 8, welche dem Rastelement 7 zugewandt ist, zu der oben genannten Radialebene einen geringen Winkel aufweist.

Ein Vergleich der Fig. 4 bis 6 zeigt, dass die erfindungsgemäß gewünschte Verquetschung des Dichtelements und/oder die hierfür benötigte Quetschkraft im Zusammenhang mit der Elastizität des Materials des Dichtelements 1 passend ausgewählt werden kann, um im fertigmontierten Zustand (Fig. 6) ein geeignetes Volumen des eingequetschten Bereiches 16 zu erreichen.

### Bezugszeichenliste

- 1: Dichtelement
- 2: erstes Spannelement
- 3: zweites Spannelement
- 4: Mittelachse
- 5: Durchgangsausnehmung
- 6: Anzeigeelement
- 7: Verrastungseinrichtung / Rastelement
- 8: Verrastungseinrichtung / Rastnase
- 9: Längsschlitz
- 10: Kopf
- 11: Spannschraube
- 12: Montageschlitz
- 13: Halbschale
- 14: Erweiterung
- 15: Scharnierbereich
- 16: eingequetschter Bereich
- 17: Mittelachse

## Patentansprüche

1. Quetschflansch mit einem im Wesentlichen ringförmigen elastischen Dichtelement (1) sowie mit einem ersten (2) und einem zweiten (3) Spannelement, wobei die Spannelemente (2, 3) axialseitig, bezogen auf eine Mittelachse (4) des Dichtelements (1), an beiden Seitenbereichen des Dichtelements (1) angeordnet sind und gegen das elastische Dichtelement (1) anpressbar sind, wobei zumindest eines der Spannelemente (2, 3) mit zumindest einer Durchgangsausnehmung (5) versehen ist, wobei Bereiche des elastischen Dichtelements (1) in die Durchgangsausnehmung (5) einpressbar sind, wobei in der Durchgangsausnehmung (5) ein in Längsrichtung der Durchgangsausnehmung (5) verschiebbares Anzeigeelement (6) angeordnet ist, wobei das Anzeigeelement (6) in einer Ausgangsposition in der Durchgangsausnehmung (5) aufgenommen ist, **dadurch gekennzeichnet, dass** das Anzeigeelement (6) in der Ausgangsposition mittels einer Verrastungseinrichtung (7, 8) in der Durchgangsausnehmung (5) verrastet ist und in einer Anzeigeposition durch eine elastische Verrastungskraft der Verrastungseinrichtung (7) ausstoßbar ist.

2. Quetschflansch nach Anspruch 1, **dadurch gekennzeichnet, dass** ein Endbereich des Anzeigeelements (6) radial, bezogen auf eine Längsachse des Anzeigeelements (6), verformbar ist.

3. Quetschflansch nach Anspruch 1 oder 2, **dadurch gekennzeichnet, dass** das Anzeigeelement (6) stiftartig ausgebildet.

4. Quetschflansch nach einem der Ansprüche 1 bis 3, **dadurch gekennzeichnet, dass** ein Endbereich des Anzeigeelementes (6) mit zumindest einem Längsschlitz (9) versehen ist.

5. Quetschflansch nach einem der Ansprüche 1 bis 4, **dadurch gekennzeichnet, dass** der Endbereich des Anzeigeelements (6) mit radial, bezogen auf die Längsachse des Anzeigeelements (6), angeordneten Rastnasen (8), welche einen Teil der Verrastungseinrichtung (7, 8) bilden, versehen ist.

6. Quetschflansch nach einem der Ansprüche 1 bis 5, **dadurch gekennzeichnet, dass** die Durchgangsausnehmung (5) mit zumindest einem Rastelement (7), welches Teil der Verrastungseinrichtung (7, 8) ist, versehen ist.

7. Quetschflansch nach einem der Ansprüche 1 bis 6, **dadurch gekennzeichnet, dass** ein vergrößerter Kopf (10) des Anzeigeelements (6) in der Ausgangsposition in einer Erweiterung (14) der Durchgangsausnehmung (5) des Spannelements (2) aufgenommen ist.

8. Quetschflansch nach einem der Ansprüche 1 bis 7, **dadurch gekennzeichnet, dass** das Anzeigeelement (6) in der Ausgangsposition in der Durchgangsausnehmung (5) des Spannelements (2) bündig mit dessen Oberfläche aufgenommen ist.

9. Quetschflansch nach einem der Ansprüche 1 bis 8, **dadurch gekennzeichnet, dass** mehrere Anzeigeelemente (6) am Umfang der Stirnseite des Spannelements (2, 3) verteilt angeordnet sind.

10. Quetschflansch nach einem der Ansprüche 1 bis 9, **dadurch gekennzeichnet, dass** das zweite Spannelement (3) mit mehreren axialen Gewindeausnehmungen und das erste Spannelement (2) mit zu den Gewindeausnehmungen fluchtenden Ausnehmungen zur Durchführung von Spannschrauben (11) versehen ist.

11. Quetschflansch nach einem der Ansprüche 1 bis 10, **dadurch gekennzeichnet, dass** das Dichtelement (1) in Axialrichtung mit zumindest einem Montageschlitz (12) versehen ist und/oder dass das Spannelement (2, 3) aus zumindest zwei Halbschalen (13) aufgebaut ist.

## Claims

1. A compressible flange with an essentially annular elastic sealing element (1) as well as with a first (2) and a second (3) clamping element, wherein the clamping elements (2, 3) are axially, relative to a central axis (4) of the sealing element (1), arranged at both side areas of the sealing element (1) and can be pressed against the elastic sealing element (1), wherein at least one of the clamping elements (2, 3) is provided with at least one passage recess (5), wherein portions of the elastic sealing element (1) can be pressed into the passage recess (5), wherein a display element (6), slidable in the longitudinal direction of the passage recess (5), is arranged in the passage recess (5), wherein the display element (6), in an initial position, is received in the passage recess (5), **characterised in that** the display element (6), in the initial position, is locked in the passage recess (5) by means of a locking device (7, 8) and, in a display position, can be ejected by means of an elastic locking force of the locking device (7).

2. The compressible flange according to claim 1, **characterised in that** an end portion of the display element (6) is radially deformable relative to a longitudinal axis of the display element (6).

3. The compressible flange according to claims 1 or 2, **characterised in that** the display element (6) has a pin-shaped design.

4. The compressible flange according to any of claims 1 to 3, **characterised in that** an end portion of the display element (6) is provided with at least one longitudinal slit (9).

5. The compressible flange according to any of claims 1 to 4, **characterised in that** the end portion of the display element (6), relative to the longitudinal axis of the display element (6), is provided with radially arranged detents (8), which form part of the locking device (7, 8).

6. The compressible flange according to any of claims 1 to 5, **characterised in that** the passage recess (5) is provided with at least one locking element (7), which is part of the locking device (7, 8).

7. The compressible flange according to any of claims 1 to 6, **characterised in that** an enlarged head (10) of the display element (6), in the initial position, is received in an enlargement (14) of the passage recess (5) of the clamping element (2).

8. The compressible flange according to any of claims 1 to 7, **characterised in that** the display element (6), in the initial position, is received in the passage recess (5) of the clamping element (2) flush with the surface of which.

9. The compressible flange according to any of claims 1 to 8, **characterised in that** several display elements (6) are arranged distributed at the circumference of the end face of the clamping element (2, 3).

10. The compressible flange according to any of claims 1 to 9, **characterised in that** the second clamping element (3) is provided with several axial threaded recesses and the first clamping element (2) is provided with recesses aligned with the threaded recesses for the passage of clamping screws (11).

11. The compressible flange according to any of claims 1 to 10, **characterised in that** the sealing element (1) is provided with at least one mounting slit (12) in the axial direction and/or the clamping element (2, 3) is composed of at least two half-shells (13).

## Revendications

1. Bride compressible avec un élément étanche (1) élastique sensiblement annulaire ainsi qu'avec un premier (2) et un second (3) élément de serrage, dans laquelle les éléments de serrage (2, 3) sont agencés côté axial, par rapport à un axe médian (4) de l'élément étanche (1), sur les deux zones latérales de l'élément étanche (1) et peuvent être pressés contre l'élément étanche (1) élastique, dans laquelle au moins un des éléments de serrage (2, 3) est pourvu d'au moins un évidement débouchant (5), dans laquelle des zones de l'élément étanche (1) élastique peuvent être enfoncées dans l'évidement débouchant (5), dans laquelle dans l'évidement débouchant (5) est agencé un élément d'affichage (6) mobile dans le sens longitudinal de l'évidement débouchant (5), dans laquelle l'élément d'affichage (6) est reçu dans une position de départ dans l'évidement débouchant (5), **caractérisée en ce que** l'élément d'affichage (6) est encliqueté dans la position de départ au moyen d'un dispositif d'encliquetage (7, 8) dans l'évidement débouchant (5) et peut être éjecté dans une position d'affichage par une force d'encliquetage élastique du dispositif d'encliquetage (7).

2. Bride compressible selon la revendication 1, **caractérisée en ce qu'**une zone d'extrémité de l'élément d'affichage (6) peut être déformée radialement par rapport à un axe longitudinal de l'élément d'affichage (6).

3. Bride compressible selon la revendication 1 ou 2, **caractérisée en ce que** l'élément d'affichage (6) est réalisé en forme de tige.

4. Bride compressible selon l'une quelconque des revendications 1 à 3, **caractérisée en ce qu'**une zone d'extrémité de l'élément d'affichage (6) est pourvue d'au moins une fente longitudinale (9).

5. Bride compressible selon l'une quelconque des revendications 1 à 4, **caractérisée en ce que** la zone d'extrémité de l'élément d'affichage (6) est pourvue de nez d'encliquetage (8) agencés radialement par rapport à l'axe longitudinal de l'élément d'affichage (6) qui forment une partie du dispositif d'encliquetage (7, 8).

6. Bride compressible selon l'une quelconque des revendications 1 à 5, **caractérisée en ce que** l'évidement débouchant (5) est pourvu d'au moins un élément d'encliquetage (7) qui fait partie du dispositif d'encliquetage (7, 8).

7. Bride compressible selon l'une quelconque des revendications 1 à 6, **caractérisée en ce qu'**une tête agrandie (10) de l'élément d'affichage (6) est reçue dans la position de départ dans un élargissement (14) de l'évidement débouchant (5) de l'élément de serrage (2).

8. Bride compressible selon l'une quelconque des revendications 1 à 7, **caractérisée en ce que** l'élément d'affichage (6) est reçu dans la position de départ dans l'évidement débouchant (5) de l'élément de serrage (2) à fleur avec sa surface.

9. Bride compressible selon l'une quelconque des revendications 1 à 8, **caractérisée en ce que** plusieurs éléments d'affichage (6) sont agencés par répartition sur la périphérie du côté avant de l'élément de serrage (2, 3).

10. Bride compressible selon l'une quelconque des revendications 1 à 9, **caractérisée en ce que** le second élément de serrage (3) est pourvu de plusieurs évidements filetés axiaux et le premier élément de serrage (2) est pourvu d'évidements s'alignant sur les évidements filetés pour le passage de vis de serrage (11).

11. Bride compressible selon l'une quelconque des revendications 1 à 10, **caractérisée en ce que** l'élément étanche (1) est pourvu dans le sens axial d'au moins une fente de montage (12) et/ou **en ce que** l'élément de serrage (2, 3) est constitué d'au moins deux demi-coques (13).
